# EUROPEAN PATENT SPECIFICATION

(11) **EP 4 466 683 B1**
(45) Date of publication and mention of the grant of the patent: **01.07.2026**
(21) Application number: 23807774.7
(22) Date of filing: 29.03.2023
(51) Int. Cl.: G06V 40/20, G06V 20/40, G06V 10/74, G06V 10/82, G06T 7/20

(54) **SYSTEMS AND METHODS FOR RECOGNIZING NON-LINE-OF-SIGHT HUMAN ACTIONS**
SYSTEME UND VERFAHREN ZUR ERKENNUNG VON MENSCHLICHEN AKTIONEN OHNE SICHTLINIE
SYSTÈMES ET PROCÉDÉS POUR RECONNAÎTRE DES ACTIONS HUMAINES SANS VISIBILITÉ DIRECTE

(30) Priority: 16.05.2022 IN 202241028092; 24.11.2022 IN 202241028092
(43) Date of publication of application: 27.11.2024
(73) Proprietor: Samsung Electronics Co., Ltd, Suwon-si, Gyeonggi-do 16677 (KR)
(72) Inventor: S R, Vishakha, Bengaluru Karnataka 560037 (IN); BINDIGAN HARIPRASANNA, Pawan Prasad, Bengaluru Karnataka 560037 (IN); K S, Green Rosh, Bengaluru Karnataka 560037 (IN); JAYAPRAKASH, Akula, Bengaluru Karnataka 560037 (IN); KUKREJA, Prateek, Bengaluru Karnataka 560037 (IN)
(74) Representative: Gulde & Partner
(86) International application number: PCT/KR2023/004185
(87) International publication number: WO 2023/224251

(56) References cited:
- WO-A1-2022/043983
- US-A1- 2015 213 308
- US-A1- 2015 324 636
- US-A1- 2020 098 085
- US-A1- 2020 349 765
- BLOOM VICTORIA ET AL: "Linear latent low dimensional space for online early action recognition and prediction", PATTERN RECOGNITION, vol. 72, 4 July 2017 (2017-07-04), pages 532 - 547, XP085169847, ISSN: 0031-3203, DOI: 10.1016/J.PATCOG.2017.07.003

## Description

### [Technical Field]

The present disclosure generally relates to image processing, and more particularly relates to systems and methods for recognizing non-line-of-sight human actions from a plurality of image frames.

### [BACKGROUND ART]

Image-based human action recognition refers to the technology of automatically analyzing human actions based on captured image frames of a single person or a group of people. For example, one particularly useful application of image based human action recognition is for monitoring health and wellness of individuals based on video images captured by surveillance cameras.

However, such conventional techniques for recognizing human action fail to accurately recognize the action when the person is out of field-of-view (FOV) of the camera. Further, such conventional techniques for recognizing human action are complex and require extensive components.

Accordingly, there is a need to overcome at least the above challenges associated with recognition of human actions from image frames.

A conventional system and method for recognizing non-line-of-sight human actions from a plurality of image frames is disclosed in BLOOM VICTORIA ET AL: "Linear latent low dimensional space for online early action recognition and prediction", PATTERN RECOGNITION, vol. 72 , pages 532-547, XP085169847, ISSN: 0031-3203, DOI: 10.1016/J.PATCOG.2017.07.003.

### [DISCLOSURE]

### [TECHNICAL SOLUTION]

This summary is provided to introduce a selection of concepts, in a simplified format, that are further described in the detailed description of the invention. This summary is neither intended to identify key or essential inventive concepts of the invention and nor is it intended for determining the scope of the invention. The invention is defined by the appended set of claims. The description that follows is subjected to this limitation. Any disclosure lying outside the scope of said claims is only intended for illustrative as well as comparative purposes.

To further clarify the advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### [DESCRIPTION OF DRAWINGS]

These and other features, aspects, and advantages of the present invention will become better understood when the following detailed description is read with reference to the accompanying drawings in which like characters represent like parts throughout the drawings, wherein:
Figure 1 illustrates a schematic block diagram of a system for recognizing non-line-of-sight human action, according to an embodiment of the present disclosure;
Figure 2 illustrates a schematic workflow of recognizing non-line-of-sight human action, according to an embodiment of the present disclosure;
Figure 3 illustrates an exemplary process of a method for recognizing non-line-of-sight human action, according to an embodiment of the present disclosure;
Figure 4 illustrates an exemplary process of a method for recognizing non-line-of-sight human action, according to another embodiment of the present disclosure;
Figure 5 illustrates an exemplary process flow of recognizing non-line-of-sight human action, according to an embodiment of the present disclosure; and
Figures 6A and 6B illustrate generation of a pattern to recognize human action, according to an embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

### [MODE FOR INVENTION]

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprise", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the present disclosure are directed towards methods and systems for recognizing non-line-of-sight human actions. Specifically, a key objective of the present disclosure is to accurately recognize a human action even when the person performing the action is not in line-of-sight of a camera device.

The term "non-line-of-sight human action" used throughout the specification may refer to human action which is performed when the person performing the action is either partially or completely not in line-of-sight of a camera device capturing the human action either at a start of the action or at an end of the action.

The terms "camera", "camera device", and "imaging device" may be used interchangeably throughout the description.

The terms "entity", "person" and "human" may be used interchangeably throughout the description.

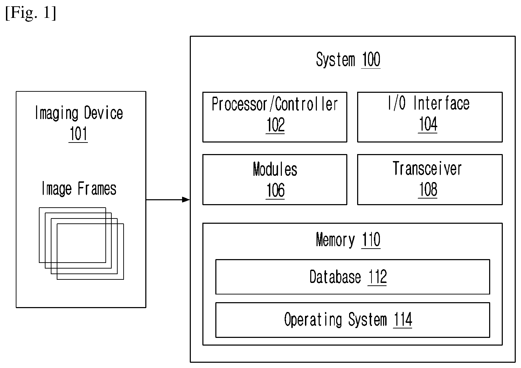

Figure 1 illustrates a schematic block diagram of a system 100 for recognizing non-line-of-sight human action, according to an embodiment of the present disclosure. In an embodiment, the system 100 may be included within an imaging device 101 associated with a user. Examples of the imaging device 101 may include, but not limited to, compact cameras, digital cameras, smartphone cameras, mirrorless cameras, video camera, and/or any other image capturing device. In another embodiment, the system 100 may be configured to operate as a standalone device or a system based in a server/cloud architecture communicably coupled to the imaging device 101.

The system 100 may be configured to receive and process a plurality of image frames captured by the imaging device 101 to recognize a human action. The system 100 may include a processor/controller 102, an Input/Output (I/O) interface 104, one or more modules 106, a transceiver 108, and a memory 110.

In an exemplary embodiment, the processor/controller 102 may be operatively coupled to each of the I/O interface 104, the modules 106, the transceiver 108 and the memory 110. In one embodiment, the processor/controller 102 may include at least one data processor for executing processes in Virtual Storage Area Network. The processor/controller 102 may include specialized processing units such as, integrated system (bus) controllers, memory management control units, floating point units, graphics processing units, digital signal processing units, etc. In one embodiment, the processor/controller 102 may include a central processing unit (CPU), a graphics processing unit (GPU), or both. The processor/controller 102 may be one or more general processors, digital signal processors, application-specific integrated circuits, field-programmable gate arrays, servers, networks, digital circuits, analog circuits, combinations thereof, or other now known or later developed devices for analyzing and processing data. The processor/controller 102 may execute a software program, such as code generated manually (i.e., programmed) to perform the desired operation.

The processor/controller 102 may be disposed in communication with one or more input/output (I/O) devices via the I/O interface 104. The I/O interface 104 may employ communication code-division multiple access (CDMA), high-speed packet access (HSPA+), global system for mobile communications (GSM), long-term evolution (LTE), WiMAX, or the like, etc.

Using the I/O interface 104, the system 100 may communicate with one or more I/O devices, specifically, to the imaging devices used for capturing the plurality of image frames. Other examples of the input device may be an antenna, microphone, touch screen, touchpad, storage device, transceiver, video device/source, etc. The output devices may be a printer, fax machine, video display (e.g., cathode ray tube (CRT), liquid crystal display (LCD), light-emitting diode (LED), plasma, Plasma Display Panel (PDP), Organic light-emitting diode display (OLED) or the like), audio speaker, etc. In an embodiment, the I/O interface 104 may enable input and output to and from the system 100 using suitable devices such as, but not limited to, display, keyboard, mouse, touch screen, microphone, speaker and so forth.

The processor/controller 102 may be disposed in communication with a communication network via a network interface. In an embodiment, the network interface may be the I/O interface 104. The network interface may connect to the communication network to enable connection of the system 100 with the outside environment and/or device/system. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network may include, without limitation, a direct interconnection, local area network (LAN), wide area network (WAN), wireless network (e.g., using Wireless Application Protocol), the Internet, etc. Using the network interface and the communication network, the system 100 may communicate with other devices. The network interface may employ connection protocols including, but not limited to, direct connect, Ethernet (e.g., twisted pair 10/100/1000 Base T), transmission control protocol/internet protocol (TCP/IP), token ring, IEEE 802.11a/b/g/n/x, etc.

In an exemplary embodiment, the processor/controller 102 may be configured to receive the plurality of frames from the imaging device 101. The processor/controller 602 may execute a set of instructions on the received frames to recognize the human action. In an exemplary embodiment, the processor/controller 102 may receive the plurality of image frames in a sequential order, where at least one image frame from the plurality of image frames comprises at least one entity performing an action. Here, the entity may refer to a person/human performing the action. In an embodiment, the plurality of image frames may correspond to a video of the action. The processor/controller 102 may also be configured to analyze the plurality of image frames to determine that a first partial portion of the action occurs within a Field of View (FOV) of the imaging device 101 and a second partial portion of the action occurs outside the field of view of the imaging device. For example, in case of image frames corresponding to jump action, the processor/controller 102 may identify that a starting portion till the person reaches to a maximum height occurs within the FOV, while the ending portion after the maximum height occurs outside the FOV of the imaging device 101 or vice versa.

Further, the processor/controller 102 may be configured to identify a type of motion during the action based on a first partial portion. For example, in the jump action scenario, the processor/controller 102 may identify that the person is going upwards in the first partial portion of the action. Thereafter, the processor/controller 102 may be configured to extrapolate the motion to generate a trajectory of motion corresponding to a second partial portion of the action. For example, in the jump action scenario, the processor/controller 102 may be configured to extrapolate the motion as the person coming downwards after reaching the maximum height in the second partial portion of the action. Based on the extrapolation, the processor/controller may be configured to generate the trajectory of motion. For example, in the jump action scenario, a trajectory similar to an inverse parabolic line drawing may be generated. Here, the processor/controller 102 may identify a user by inputting each of a plurality of frames to a neural network model.

Then, the processor/controller 102 may be configured to identify a peak frame from the plurality of frames. The peak frame may include a peak point of the action. For example, in the discussed jump case scenario, the processor/controller 102 may identify a frame as the peak frame where the person performing the action is at the maximum height. In another embodiment, in order to identify the peak frame, the processor/controller 102 may be configured to estimate a plurality of key points associated with the person from the frames where the entity is in line-of-sight/Field-of-view. The key points may refer to main body parts of the entity including head, hand joints, leg joints, and so forth. Further, the processor/controller 102 may be configured to identify a mean key position corresponding to the entity in each of the frames where the entity is in line-of-sight/Field-of-view. The processor/controller 102 may also be configured to compute a mean key position trajectory using the estimated key points associated with the entity. Further, the processor/controller 102 may be configured to extrapolate the mean key position trajectory for the frames where the entity is out of the line-of-sight/FOV. Thereafter, the processor/controller 102 may be configured to identify the peak frame based on the extrapolated mean key position trajectory. In an embodiment, the processor/controller 102 may be configured to identify a deviation in the mean key position trajectory in order to determine the peak frame. The deviation may include a change in direction of the mean key position trajectory or a change in speed of the mean key position trajectory. For example, for the jump action scenario, the mean key position trajectory may move upward for some time, and then moves downward. Therefore, the processor/controller 102 may be configured to consider the frame where the direction of the mean key position trajectory changes from upward to downward, as the peak frame. Here, the processor/controller 102 may input each of a plurality of frames to a neural network model to identify a user's key point, and may identify a peak frame based on the plurality of user's key points.

The processor/controller 102 may identify a plurality of peak frames from the plurality of frames. For example, when the user jumps twice, the processor/controller 102 determines a peak frame corresponding to an expected peak time of a first jump, a peak frame corresponding to a landing time after the first jump, an expected peak time of a second jump and a peak frame corresponding to a landing time after the second jump.

The processor/controller 102 may be configured to construct a binary tree of the plurality of frames considering the identified peak frame as a root node. In an exemplary embodiment, the frames received/captured prior to the identified peak frame form one branch of the binary tree and the image frame received/captured after the identified peak frame form another branch of the binary tree.

Further, the processor/controller 102 may be configured to re-order the sequential order of the plurality of frames using a level order traversal of the constructed binary tree. The level order traversal may refer to processing of each node of the constructed binary tree by traversing through depth, first the root, and then child of the root, etc. For example, the processor/controller 102 may be configured to traverse through the binary tree of the frames by first processing the peak frame, a frame from a first branch, then a frame from a second branch, and so on.

Furthermore, the processor/controller 102 may be configured to identify a pattern corresponding to positions of the at least one entity in the re-ordered plurality of frames. Thereafter, the processor/controller 102 may be configured to compare the identified pattern with one or more pre-trained patterns to recognize the human action performed by the at least one entity. In an embodiment, the pre-trained patterns may be stored in a database 112 of the memory 110. Thus, the processor/controller 102 may be configured to recognize the human action based on said comparison of identified pattern with the pre-trained patterns.

The processor/controller 102 may identify part of frames at predetermined intervals among a plurality of frames based on at least one of a power state or resource information of the system 100, and identify an operation of an entity based on the identified frames. Alternatively, the processor/controller 102 downscales a resolution of each of the plurality of frames based on at least one of the power state or resource information of the system 100, and identifies the operation of the entity based on the plurality of downscaled frames.

When a plurality of entities are identified in each of a plurality of frames, the processor/controller 102 may identify one entity based on a size of the plurality of entities and identify an operation of the identified entity. Alternatively, When a plurality of entities are identified in each of a plurality of frames, the processor/controller 102 identifies a type of each of the plurality of entities, identifies one entity based on the type of each of the plurality of entities, and identifies a behavior of the identified entity.

In some embodiments, the memory 110 may be communicatively coupled to the at least one processor/controller 102. The memory 110 may be configured to store data, instructions executable by the at least one processor/controller 102. In one embodiment, the memory 110 may communicate via a bus within the system 100. The memory 110 may include, but not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory 110 may include a cache or random access memory for the processor/controller 102. In alternative examples, the memory 110 is separate from the processor/controller 102, such as a cache memory of a processor, the system memory, or other memory. The memory 110 may be an external storage device or database for storing data. The memory 110 may be operable to store instructions executable by the processor/controller 102. The functions, acts or tasks illustrated in the figures or described may be performed by the programmed processor/controller 102 for executing the instructions stored in the memory 110. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing, and the like.

In some embodiments, the modules 106 may be included within the memory 110. The one or more modules 106 may include a set of instructions that may be executed to cause the system 100 to perform any one or more of the methods /processes disclosed herein. In some embodiment, the modules 106 may be configured to perform one or more operations of the processor/controller 102. The one or more modules 106 may be configured to perform the steps of the present disclosure using the data stored in the database 112 to recognize the human action as discussed herein. In an embodiment, each of the one or more modules 106 may be a hardware unit which may be outside the memory 110. Further, the memory 110 may include an operating system 114 for performing one or more tasks of the system 100, as performed by a generic operating system in the communications domain. The transceiver 108 may be configured to receive and/or transmit signals to and from the imaging device 101 associated with the user. In one embodiment, the database 112 may be configured to store the information as required by the one or more modules 106 and the processor/controller 102 to perform one or more functions for recognizing the human action from the image frames.

Further, the present invention contemplates a computer-readable medium that includes instructions or receives and executes instructions responsive to a propagated signal. Further, the instructions may be transmitted or received over the network via a communication port or interface or using a bus (not shown). The communication port or interface may be a part of the processor/controller 102 or may be a separate component. The communication port may be created in software or may be a physical connection in hardware. The communication port may be configured to connect with a network, external media, the display, or any other components in system, or combinations thereof. The connection with the network may be a physical connection, such as a wired Ethernet connection or may be established wirelessly. Likewise, the additional connections with other components of the system 100 may be physical or may be established wirelessly. The network may alternatively be directly connected to the bus. For the sake of brevity, the architecture, and standard operations of the operating system 114, the memory 110, the database 112, the processor/controller 102, the transceiver 108, and the I/O interface 104 are not discussed in detail.

Meanwhile, the function related to the artificial intelligence according to an embodiment is operated through the processor/controller 102 and the memory 110.

The processor/controller 102 may consist of one processor or a plurality of processors. In this case, the one or the plurality of processors may be a general-purpose processor such as Central Processing Unit (CPU), Application Processor (AP), Digital Signal Processor (DSP), etc., a graphics-only processor such as Graphics Processing Unit (GPU) and Vision Processing Unit (VPU), or an artificial intelligence-only processor such as Neural Processing Unit (NPU).

One or a plurality of processors control to process input data according to a predefined operation rule stored in a memory or an artificial intelligence model. Alternatively, if one or a plurality of processors are AI-only processors, the AI-only processors may be designed in a hardware structure specialized for processing a specific artificial intelligence model. The predefined operation rule or the artificial intelligence model is characterized by being created through learning.

Here, being created through learning means creating a predefined operation rule or an artificial intelligence model that is set to perform a desired characteristic (or purpose) as a basic artificial intelligence model is trained by a learning algorithm using a plurality of learning data. Such learning may be conducted in an apparatus itself where artificial intelligence according to an embodiment is performed, or may be conducted through a separate server and/or system. The examples of the learning algorithm include supervised learning, unsupervised learning, semi-supervised learning or reinforcement learning, but are not limited thereto.

The artificial intelligence model may be composed of a plurality of neural network layers. Each of the plurality of neural network layers has a plurality of weight values, and performs a neural network operation through operation between a result of operation of the previous layer and the plurality of weight values. The plurality of weight values of the plurality of neural network layers may be optimized by a learning result of the artificial intelligence model. For example, the plurality of weight values may be updated so that a loss value or a cost value obtained from the artificial intelligence model during the learning process is reduced or minimized.

The artificial neural network may include a Deep Neural Network (DNN) and for example, may be a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Networks, etc. However, the artificial neural network is not limited to the above-mentioned examples.

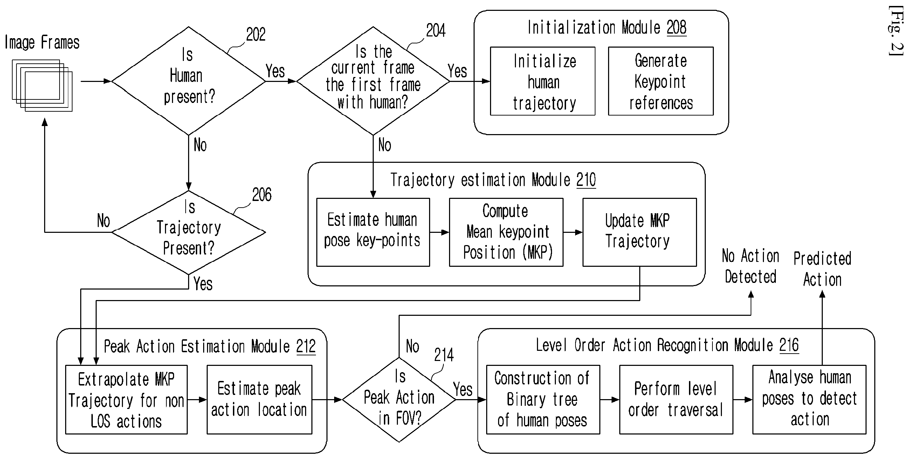

Figure 2 illustrates a schematic workflow of recognizing non-line-of-sight human action using a plurality of image frames (interchangeably referred to as "frames"), according to an embodiment of the present disclosure. Fig. 2 may be explained in conjunction with Fig. 1.

Block 202 may represent determination of presence of a human in the image frames. Specifically, at block 202, the system 100 may process the frames to determine whether the human is present or not. When the system 100 determines a presence of human, the workflow moves to block 204. However, when the system 100 determines that no human is present in the frame, the workflow moves to block 206.

Block 204 may represent determination of a first frame where the human is present. Specifically, the system 100 may determine whether a current frame is the first frame with the human or not. In case, the current frame is the first frame with the human, the workflow moves to block 208. However, in case the current frame is not the first frame with the human, the workflow moves to block 210.

Block 206 may present determination of presence of a trajectory. The system 100 may determine whether there is any trajectory present or not. In case, the system 100 determines a trajectory, the workflow moves to block 212. However, in case system 100 fails to determine the trajectory, the workflow moves back to image frames. Thus, in case of no trajectory, the block 206 may form a close loop with block 202.

Block 208 may represent an initialization module. The initialization module 208 may be a part of the modules 106, shown in Fig. 1. The initialization module 208 may be activated at a first instance when the human is detected in the frames. Specifically, the initialization module 208 may be activated when the system 100 determines that the current frame is the first frame with human. The initialization module 208 may be configured to initialize the human trajectory. In an embodiment, the initialization module 208 may be configured to mark a starting point of the human trajectory. Further, the initialization module 208 may be configured to generate key points reference corresponding to the identified human in the frame. The key points may correspond to body parts and/or joints of the human.

Block 210 may represent a trajectory estimation module. The trajectory estimation module 210 may be a part of the modules 106, shown in Fig. 1. The trajectory estimation module 210 may be activated when the system 100 determines that the current frame includes the human, and the current frame is not the first frame with human. In such scenario, the trajectory estimation module 210 may be configured to estimate human-pose key points. In an embodiment, the human-pose key points may be determined based on key point reference generated by the initialization module 208. The trajectory estimation module 210 may be configured to compute mean key position positions based on the human-pose key points. The key point may be a single point representation of a position of the human in the frame. Thereafter, the trajectory estimation module 210 may be configured to generate/update the Mean Key Position (MKP) trajectory. The trajectory estimation module 210 may also be configured to pass the generated MKP trajectory to block 212. Also at block 206, when the system 100 determines that a trajectory is present, the workflow moves to block 212.

Block 212 may represent a peak action estimation module. The peak action estimation module 212 may be a part of the modules 106, shown in Fig. 1. The peak action estimation module 212 may be configured to extrapolate MKP trajectory for the frames when the human is not in Line of Sight (LoS)/Field of View (FoV). Further, based on the extrapolate MKP trajectory, the peak action estimation module 212 may be configured to estimate a peak action and corresponding image frame.

Block 214 may represent determination of presence of peak action in FOV. Specifically, the system 100 may determine whether the peak action is in FOV or not. In case the system 100 determines that the peak action is in FOV, the workflow moves to block 216. However, in case the system 100 determines that the peak action is not in FOV, the workflow may not detect any action.

Block 216 may represent a level order action recognition module. The level order action recognition module 216 (also referred as "the module 216") may be a part of the modules 106, shown in Fig. 1. The module 216 may be configured to construct a binary tree of the frames considering the peak frame as root node. Further, the module 216 may be configured to perform level order traversal of the constructed binary tree. The module 216 may also be configured to analyze the human poses after re-ordering the frames based on the level order traversal to detect the human action.

The various blocks illustrated in Fig. 2 are exemplary in nature. Embodiments intent to include or otherwise covers any additional block or sequence based on the requirements.

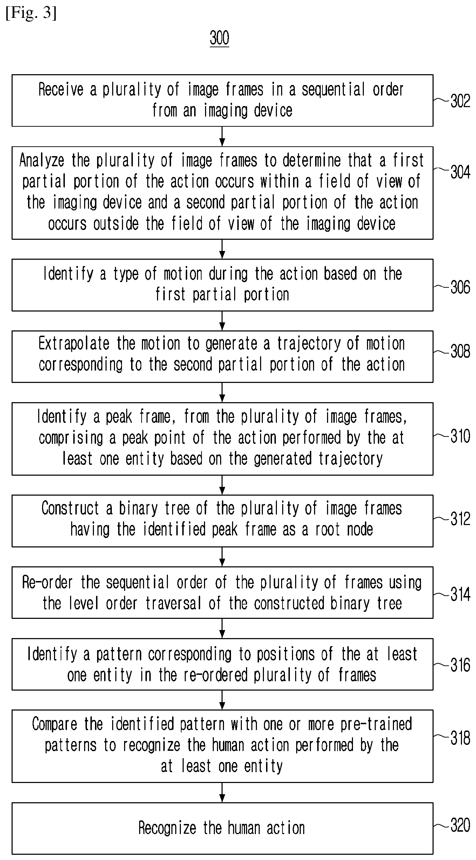

Figure 3 illustrates an exemplary process of a method 300 for recognizing non-line-of-sight human action, according to an embodiment of the present disclosure.

At step 302, the method 300 includes receiving a plurality of image frames in a sequential order from an imaging device. The plurality of image frames may be captured by the imaging device 101 and includes an entity performing an action. The entity may refer to a human/person. However, in some embodiments, the entity may also include other living being includes animals such as, dog, cat, and so forth. Examples of actions may include, but not limited, running, jumping, squats, pushups, pullups, or any other physical activity.

Next at step 304, the method 300 includes analyzing the plurality of image frames to determine that a first partial portion of the action occurs within a field of view of the imaging device 101 and a second partial portion of the action occurs outside the field of view of the imaging device 101.

At step 306, the method 300 includes identifying a type of motion during the action based on the first partial portion. For example, the type of motion may indicate that initially the entity is moving upwards, and the entity is coming downwards after a certain point.

Further at step 308, the method 300 includes extrapolating the motion to generate a trajectory of motion corresponding to the second partial portion of the action. At step 310, the method 300 includes identifying a peak frame, from the plurality of image frames, comprising a peak point of the action performed by the at least one entity based on the generated trajectory.

At step 312, the method 300 includes constructing a binary tree of the plurality of image frames having the identified peak frame as a root node. The frames received/captured prior to the identified peak frame form one branch of the binary tree and other image frame received/captured after the identified peak frame form another branch of the binary tree. Next at step 314, the method 300 includes re-ordering the sequential order of the plurality of frames using the level order traversal of the constructed binary tree.

At step 316, the method 300 includes identifying a pattern corresponding to positions of the at least one entity in the re-ordered plurality of frames. The pattern may represent a geometrical figure such as, but not limited to, a line, a parabola, an angle and so forth.

At step 318, the method 300 includes comparing the identified pattern with one or more pre-trained patterns to recognize the human action performed by the at least one entity. In an embodiment, the memory 110 may be include a relationship of the pre-trained pattern and corresponding action. Further, the system 100 may be configured utilized the stored relationship to recognize the human action based on the comparison of the identified pattern and the pre-trained patterns. Lastly at step 320, the method 300 includes recognizing the human action.

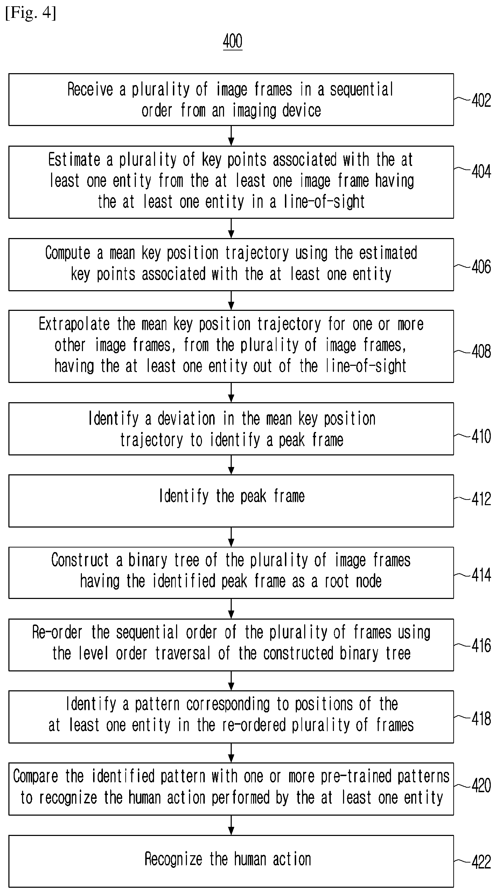

Figure 4 illustrates another exemplary process of a method 400 for recognizing non-line-of-sight human action, according to an embodiment of the present disclosure.

At step 402, the method 400 includes receiving a plurality of image frames in a sequential order from an imaging device.

Next at step 404, the method 400 includes estimating a plurality of key points associated with the at least one entity from the at least one image frame having the at least one entity in a line-of-sight. Here, the processor/controller 102 may use key points identified as larger than or equal to a predetermined size among a plurality of key points associated with an entity. For example, the processor/controller 102 may use a user's head, palm, knee, etc. identified as having a predetermined size or larger in each of a plurality of frames as key points.

Further at step 406, the method 400 includes computing a mean key position trajectory using the estimated key points associated with the at least one entity.

At step 408, the method 400 includes extrapolating the mean key position trajectory for one or more other image frames, from the plurality of image frames, having the at least one entity out of the line-of-sight.

At step 410, the method 400 includes identifying a deviation in the mean key position trajectory to identify a peak frame. In an embodiment, the deviation in the mean key position trajectory may include, but not limited to, a change in direction of the mean key position trajectory or a change in speed of the mean key position trajectory. Next at step 412, the method 400 includes identifying the peak frame.

At step 414, the method 400 includes constructing a binary tree of the plurality of image frames having the identified peak frame as a root node. Further at step 416, the method 400 includes re-ordering the sequential order of the plurality of frames using the level order traversal of the constructed binary tree.

At step 418, the method 400 includes identifying a pattern corresponding to positions of the at least one entity in the re-ordered plurality of frames. Next at step 420, the method 400 includes comparing the identified pattern with one or more pre-trained patterns to recognize the human action performed by the at least one entity. At last, at step 422, the method 400 includes recognizing the human action.

Embodiments as discussed above are exemplary in nature and the method 400 may include any additional step or omit any of above-mentioned step to perform the desired objective of the present disclosure. Further, the steps of the method 400 may be performed in any suitably order in order to achieve the desired advantages.

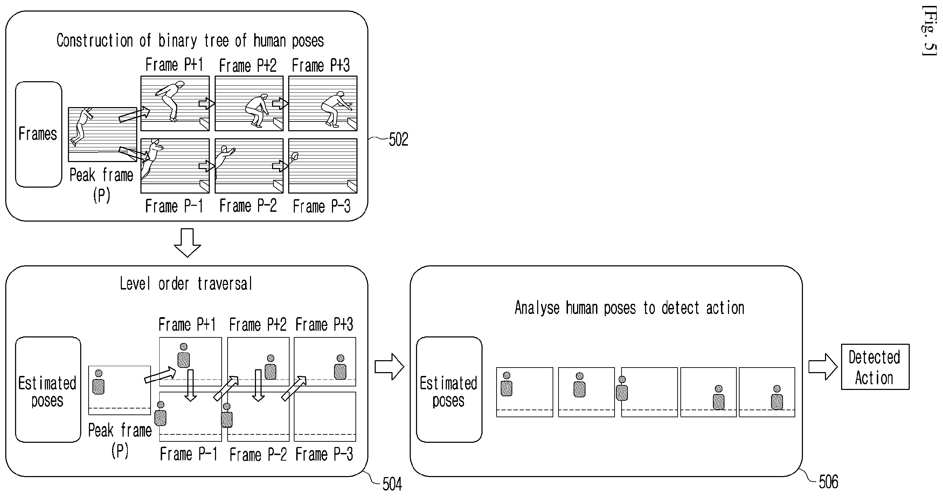

Figure 5 illustrates an exemplary process flow of recognizing non-line-of-sight human action, according to an embodiment of the present disclosure. Fig. 5 may be explained in conjunction with Fig. 1.

Block 502 may represent generation of binary tree of human poses in a plurality of frames from "P-3" to "P+3". Here, a sequential order of the image frames may be defined as "P-3, P-2, P-1, P, P+1, P+2 and P+3". The system 100 may determine frame "P" as the peak frame and consider the peak frame P as root node of a binary tree. Further, the system 100 may consider all the frames (P+1, P+2, P+3) captured/received after the peak frame "P" to form one branch of the binary tree and consider all the frames (P-1, P-2, P-3) captured/received prior to the peak frame "P" to form another branch of the binary tree, as illustrated in Fig. 5.

Block 504 may represent analysis of the binary tree using the level order traversal. The system 100 may traverse through the depth of binary tree, starting from peak frame and sequentially moving to each frame of the branches of the binary tree. An order in which the system 100 may traverse through the binary tree has been highlighted by the reference numbers 1-7. For example, the system 100 may first process peak frame "P" also annotated with reference number "1". Then, the system 100 may process "P+1" frame as also annotated with reference number "2". The system 100 may process each frame in the binary tree in accordance with annotated reference number.

Block 506 may represent analysis of human poses to detect human action. The system 100 may ignore the frames when the human is not in FOV/LOS. Therefore, the system 100 may only consider frames "P", "P+1", "P-1", "P+2" and "P+3" and may ignore the frames "P-2" and "P-3", to recognize the human action. Based on re-ordering of frames where human is in FOV and/or LOS, the system may detection the human action.

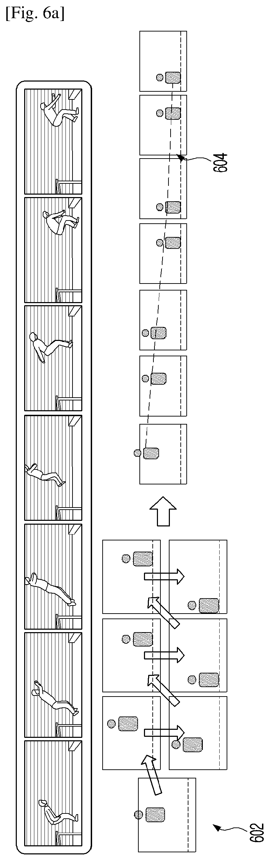

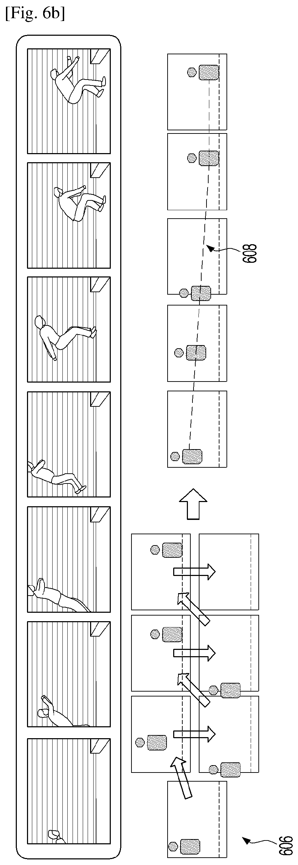

Figures 6A and 6B illustrate line-of-sight human action recognition and non-line-of-sight human action recognition, respectively, according to an embodiment of the present disclosure.

Figures 6A and 6B illustrate generation of a pattern to recognize human action, according to an embodiment of the present disclosure.

Fig. 6A illustrates a scenario where the person is in FOV of the imaging device 101 while performing the action. In this scenario, the system 100 may generate a binary tree 602, in accordance with the steps explained above. Further, the system 100 may generate a pattern 604 after analyzing the binary tree 602 using level order traversal technique. The patter 604 may be a curved line moving in downward direction. Fig. 6B illustrates a scenario when a partial portion of the person is not in FOV of the imaging device 101 while performing the action. Similar to Fig. 6A, the system 100 may generate a binary tree 606 and also generate a pattern 608 after analyzing the binary tree 606 using level order traversal technique. In an exemplary embodiment, the pattern 608 may be similar to the pattern 604, as shown in Figs. 6A and 6B. The similarity between the patterns 604 and 608 may indicate that the system 100 may accurately identify the human action even in situation where the person is not in FOV wholly.

Thus, the system 100 may be used to generate dynamic videos using the captured frames based on the accurate action recognition.

Based on above, it is clear that the present disclosure enables accurate recognition of human action where image frames contain partial or no-human due to non-line of sight scenarios. Further, the present disclosure provides a simple, compact, and accurate technique for recognizing human action. Specifically, the system reorders image frames to enable accurate detection of human action even when human is either partially or completely not in FOV either in image frames at the starting or in image frames in the end.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method (300) of recognizing non-line-of-sight human action, the method (300) comprising:
receiving (302) a plurality of image frames in a sequential order from an imaging device, wherein at least one image frame from the plurality of image frames comprises at least one entity performing an action;
analyzing (304) the plurality of image frames to determine that a first partial portion of the action occurs within a field of view of the imaging device and a second partial portion of the action occurs outside the field of view of the imaging device;
identifying (306) a type of motion during the action based on the first partial portion;
extrapolating (308) the motion to generate a trajectory of motion corresponding to the second partial portion of the action;
recognizing (320) the human action from the type of motion and the generated trajectory of the motion; and
identifying (310) a peak frame, from the plurality of image frames, comprising a peak point of the action performed by the at least one entity based on the generated trajectory;
**characterized in that** the method further comprises:
constructing (312) a binary tree of the plurality of image frames having an identified peak frame as a root node; and
recognizing (320) the action by analyzing the constructed binary tree in a level order traversal;
wherein one or more image frames received prior to the identified peak frame form one branch of the binary tree and one or more other image frame received after the identified peak frame form another branch of the binary tree,
wherein analyzing the constructed binary tree in level order traversal comprises:
re-ordering (314) the sequential order of the plurality of frames using the level order traversal of the constructed binary tree;
identifying (316) a pattern corresponding to positions of the at least one entity in the reordered plurality of frames; and
comparing (318) the identified pattern with one or more pre-trained patterns to recognize the human action performed by the at least one entity.

2. The method (300) as claimed in claim 1, further comprising:
downscaling the plurality of image frames based on at least one of a power state or resource information of a system; and
wherein the analyzing comprises analyzing (304) the plurality of downscaled image frames to determine that the first partial portion of the action occurs within the field of view of the imaging device and the second partial portion of the action occurs outside the field of view of the imaging device.

3. The method (300) as claimed in claim 1, further comprising:
identifying image frames at predetermined intervals among the plurality of image frames based on at least one of a power state or resource information of a system; and
wherein the analyzing comprises analyzing (304) the identified image frames to determine that the first partial portion of the action occurs within the field of view of the imaging device and the second partial portion of the action occurs outside the field of view of the imaging device.

4. A system (100) for recognizing non-line-of-sight human action, the system (100) comprising:
a memory (110);
at least one processor (102) communicably coupled to the memory (110), the at least one processor (102) is configured to:
receive a plurality of image frames in a sequential order from an imaging device, wherein at least one image frame from the plurality of image frames comprises at least one entity performing an action;
analyze the plurality of image frames to determine that a first partial portion of the action occurs within a field of view of the imaging device and a second partial portion of the action occurs outside the field of view of the imaging device;
identify a type of motion during the action based on the first partial portion;
extrapolate the motion to generate a trajectory of motion corresponding to the second partial portion of the action;
recognize the human action from the type of motion and the generated trajectory of the motion; and
identify a peak frame, from the plurality of image frames, comprising a peak point of the action performed by the at least one entity based on the generated trajectory;
**characterized in that** the at least one processor (102) is further configured to:
construct a binary tree of the plurality of image frames having an identified peak frame as a root node; and
recognize the human action by analyzing the constructed binary tree in a level order traversal;
wherein one or more image frames received prior to the identified peak frame form one branch of the binary tree and one or more other image frame received after the identified peak frame form another branch of the binary tree,
wherein analyzing the constructed binary tree in level order traversal comprises the processor being configured to:
re-order the sequential order of the plurality of frames using the level order traversal of the constructed binary tree;
identify a pattern corresponding to positions of the at least one entity in the reordered plurality of frames; and
compare the identified pattern with one or more pre-trained patterns to recognize the human action performed by the at least one entity.

5. The system (100) as claimed in claim 4, wherein the at least one processor (102) is configured to:
downscale the plurality of image frames based on at least one of a power state or resource information of a system; and
analyze the plurality of downscaled image frames to determine that the first partial portion of the action occurs within the field of view of the imaging device and the second partial portion of the action occurs outside the field of view of the imaging device.

6. The system (100) as claimed in claim 4, wherein the at least one processor (102) is configured to:
identify image frames at predetermined intervals among the plurality of image frames based on at least one of a power state or resource information of a system; and
analyze the identified image frames to determine that the first partial portion of the action occurs within the field of view of the imaging device and the second partial portion of the action occurs outside the field of view of the imaging device.

## Patentansprüche

1. Verfahren (300) zur Erkennung von menschlichen Aktionen ohne Sichtlinie, wobei das Verfahren (300) Folgendes umfasst:
Empfangen (302) einer Vielzahl von Bildrahmen in einer sequenziellen Reihenfolge von einer Bildgebungsvorrichtung, wobei mindestens ein Bildrahmen aus der Vielzahl von Bildrahmen mindestens eine Entität umfasst, die eine Aktion durchführt;
Analysieren (304) der Vielzahl von Bildrahmen, um festzustellen, dass ein erster Teilabschnitt der Aktion innerhalb eines Sichtfelds der Bildgebungsvorrichtung und ein zweiter Teilabschnitt der Aktion außerhalb des Sichtfelds der Bildgebungsvorrichtung stattfindet;
Identifizieren (306) einer Bewegungsart während der Aktion auf der Grundlage des ersten Teilabschnitts;
Extrapolieren (308) der Bewegung, um eine Bewegungstrajektorie zu erzeugen, die dem zweiten Teilabschnitt der Aktion entspricht;
Erkennen (320) der menschlichen Aktion anhand der Bewegungsart und der erzeugten Bewegungstrajektorie; und
Identifizieren (310) eines Spitzenrahmens aus der Vielzahl von Bildrahmen, das einen Spitzenpunkt der von der mindestens einen Entität auf der Grundlage der erzeugten Trajektorie durchgeführten Aktion umfasst;
**dadurch gekennzeichnet, dass** das Verfahren ferner Folgendes umfasst:
Konstruieren (312) eines Binärbaums der Vielzahl von Bildrahmen, der einen identifizierten Spitzenrahmen als Wurzelknoten aufweist; und
Erkennen (320) der Aktion durch Analysieren des konstruierten Binärbaums in einer Level-Order-Traversierung;
wobei ein oder mehrere vor dem identifizierten Spitzenrahmen empfangene Bildrahmen einen Zweig des Binärbaums und ein oder mehrere andere nach dem identifizierten Spitzenrahmen empfangene Bildrahmen einen anderen Zweig des Binärbaums bilden,
wobei das Analysieren des konstruierten Binärbaums in einer Level-Order-Traversierung Folgendes umfasst:
Neuordnen (314) der sequenziellen Reihenfolge der Vielzahl von Rahmen unter Verwendung der Level-Order-Traversierung des konstruierten Binärbaums;
Identifizieren (316) eines Musters, das den Positionen der mindestens einen Entität in der neu geordneten Vielzahl von Rahmen entspricht; und
Vergleichen (318) des identifizierten Musters mit einem oder mehreren vortrainierten Mustern, um die von der mindestens einen Entität durchgeführte menschliche Aktion zu erkennen.

2. Verfahren (300) nach Anspruch 1, umfassend ferner:
Herunterskalieren der Vielzahl von Bildrahmen auf der Grundlage mindestens eines von einem Leistungszustand und einer Ressourceninformation eines Systems; und
wobei das Analysieren das Analysieren (304) der Vielzahl von herunterskalierten Bildrahmen umfasst, um festzustellen, dass der erste Teilabschnitt der Aktion innerhalb des Sichtfelds der Bildgebungsvorrichtung und der zweite Teilabschnitt der Aktion außerhalb des Sichtfelds der Bildgebungsvorrichtung stattfindet.

3. Verfahren (300) nach Anspruch 1, umfassend ferner:
Identifizieren von Bildrahmen in vorbestimmten Intervallen unter der Vielzahl von Bildrahmen auf der Grundlage mindestens eines von einem Leistungszustand und einer Ressourceninformation eines Systems; und
wobei das Analysieren das Analysieren (304) der identifizierten Bildrahmen umfasst, um festzustellen, dass der erste Teilabschnitt der Aktion innerhalb des Sichtfelds der Bildgebungsvorrichtung und der zweite Teilabschnitt der Aktion außerhalb des Sichtfelds der Bildgebungsvorrichtung stattfindet.

4. System (100) zur Erkennung von menschlichen Aktionen ohne Sichtlinie, wobei das System (100) Folgendes umfasst:
einen Speicher (110);
mindestens einen Prozessor (102), der kommunikativ mit dem Speicher (110) gekoppelt ist, wobei der mindestens eine Prozessor (102) dazu konfiguriert ist,
eine Vielzahl von Bildrahmen in einer sequenziellen Reihenfolge von einer Bildgebungsvorrichtung zu empfangen, wobei mindestens ein Bildrahmen aus der Vielzahl von Bildrahmen mindestens eine Entität umfasst, die eine Aktion durchführt;
die Vielzahl von Bildrahmen zu analysieren, um festzustellen, dass ein erster Teilabschnitt der Aktion innerhalb eines Sichtfelds der Bildgebungsvorrichtung und ein zweiter Teilabschnitt der Aktion außerhalb des Sichtfelds der Bildgebungsvorrichtung stattfindet;
eine Bewegungsart während der Aktion auf der Grundlage des ersten Teilabschnitts zu identifizieren;
die Bewegung zu extrapolieren, um eine Bewegungstrajektorie zu erzeugen, die dem zweiten Teilabschnitt der Aktion entspricht;
die menschliche Aktion anhand der Bewegungsart und der erzeugten Bewegungstrajektorie zu erkennen; und
aus der Vielzahl von Bildrahmen einen Spitzenrahmen zu identifizieren, der einen Spitzenpunkt der von der mindestens einen Entität auf der Grundlage der erzeugten Trajektorie durchgeführten Aktion umfasst;
**dadurch gekennzeichnet, dass** der mindestens eine Prozessor (102) ferner dazu konfiguriert ist,
einen Binärbaum der Vielzahl von Bildrahmen zu konstruieren, der einen identifizierten Spitzenrahmen als Wurzelknoten aufweist; und
die menschliche Aktion durch Analysieren des konstruierten Binärbaums in einer Level-Order-Traversierung zu erkennen;
wobei ein oder mehrere vor dem identifizierten Spitzenrahmen empfangene Bildrahmen einen Zweig des Binärbaums und ein oder mehrere andere nach dem identifizierten Spitzenrahmen empfangene Bildrahmen einen anderen Zweig des Binärbaums bilden,
wobei das Analysieren des konstruierten Binärbaums in einer Level-Order-Traversierung umfasst, dass der Prozessor dazu konfiguriert ist,
die sequenzielle Reihenfolge der Vielzahl von Bildrahmen unter Verwendung der Level-Order-Traversierung des konstruierten Binärbaums neu zu ordnen;
ein Muster zu identifizieren, das den Positionen der mindestens einen Entität in der neu geordneten Vielzahl von Rahmen entspricht; und
das identifizierte Muster mit einem oder mehreren vortrainierten Mustern zu vergleichen, um die von der mindestens einen Entität durchgeführte menschliche Aktion zu erkennen.

5. System (100) nach Anspruch 4, wobei der mindestens eine Prozessor (102) dazu konfiguriert ist,
die Vielzahl von Bildrahmen auf der Grundlage mindestens eines von einem Leistungszustand und einer Ressourceninformation eines Systems herunter zu skalieren; und
die Vielzahl von herunterskalierten Bildrahmen zu analysieren, um festzustellen, dass der erste Teilabschnitt der Aktion innerhalb des Sichtfelds der Bildgebungsvorrichtung und der zweite Teilabschnitt der Aktion außerhalb des Sichtfelds der Bildgebungsvorrichtung stattfindet.

6. System (100) nach Anspruch 4, wobei der mindestens eine Prozessor (102) dazu konfiguriert ist,
Bildrahmen in vorbestimmten Intervallen unter der Vielzahl von Bildrahmen auf der Grundlage mindestens eines von einem Leistungszustand und einer Ressourceninformation eines Systems zu identifizieren; und
die identifizierten Bildrahmen zu analysieren, um festzustellen, dass der erste Teilabschnitt der Aktion innerhalb des Sichtfelds der Bildgebungsvorrichtung und der zweite Teilabschnitt der Aktion außerhalb des Sichtfelds der Bildgebungsvorrichtung stattfindet.

## Revendications

1. Procédé (300) pour reconnaître des actions humaines sans visibilité directe, le procédé (300) comprenant :
la réception (302) d'une pluralité de trames d'image dans un ordre séquentiel depuis un dispositif d'imagerie, dans lequel au moins une trame d'image parmi la pluralité de trames d'image comprend au moins une entité effectuant une action ;
l'analyse (304) de la pluralité de trames d'image pour déterminer qu'une première portion partielle de l'action se produit dans un champ de vision du dispositif d'imagerie et qu'une seconde portion partielle de l'action se produit en dehors du champ de vision du dispositif d'imagerie ;
l'identification (306) d'un type de mouvement pendant l'action sur la base de la première portion partielle ;
l'extrapolation (308) du mouvement pour générer une trajectoire de mouvement correspondant à la seconde portion partielle de l'action ;
la reconnaissance (320) des actions humaines à partir du type de mouvement et de la trajectoire générée du mouvement ; et
l'identification (310) d'une trame de pic, parmi la pluralité de trames d'image, comprenant un point de pic de l'action effectuée par l'au moins une entité sur la base de la trajectoire générée ;
**caractérisé en ce que** le procédé comprend en outre :
la construction (312) d'un arbre binaire de la pluralité de trames d'image ayant une trame de pic identifiée comme un nœud racine ; et
la reconnaissance (320) de l'action par analyse de l'arbre binaire construit dans un parcours par ordre de niveau ;
dans lequel une ou plusieurs trames d'image reçues avant la trame de pic identifiée forment une branche de l'arbre binaire et une ou plusieurs autres trames d'image reçues après la trame de pic identifiée forment une autre branche de l'arbre binaire,
dans lequel l'analyse de l'arbre binaire construit en parcours par ordre de niveau comprend :
la réorganisation (314) de l'ordre séquentiel de la pluralité de trames en utilisant le parcours par ordre de niveau de l'arbre binaire construit ;
l'identification (316) d'un motif correspondant à des positions de l'au moins une entité dans la pluralité de trames réorganisées ; et
la comparaison (318) du motif identifié avec un ou plusieurs motifs pré-entraînés pour reconnaître les actions humaines effectuée par l'au moins une entité.

2. Procédé (300) tel que revendiqué dans la revendication 1, comprenant en outre :
la réduction d'échelle de la pluralité de trames d'image sur la base d'au moins l'un parmi un état d'alimentation électrique ou des informations de ressources d'un système ; et
dans lequel l'analyse comprend l'analyse (304) de la pluralité de trames d'image réduites en échelle pour déterminer que la première portion partielle de l'action se produit dans le champ de vision du dispositif d'imagerie et que la seconde portion partielle de l'action se produit en dehors du champ de vision du dispositif d'imagerie.

3. Procédé (300) tel que revendiqué dans la revendication 1, comprenant en outre :
l'identification de trames d'image à des intervalles prédéterminés parmi la pluralité de trames d'image sur la base d'au moins l'un parmi un état d'alimentation électrique ou des informations de ressources d'un système ; et
dans lequel l'analyse comprend l'analyse (304) des trames d'image identifiées pour déterminer que la première portion partielle de l'action se produit dans le champ de vision du dispositif d'imagerie et que la seconde portion partielle de l'action se produit en dehors du champ de vision du dispositif d'imagerie.

4. Système (100) pour reconnaître des actions humaines sans visibilité directe, le système (100) comprenant :
une mémoire (110) ;
au moins un processeur (102) couplé communicablement à la mémoire (110), l'au moins un processeur (102) est configuré pour :
recevoir une pluralité de trames d'image dans un ordre séquentiel depuis un dispositif d'imagerie, dans lequel au moins une trame d'image parmi la pluralité de trames d'image comprend au moins une entité effectuant une action ;
analyser la pluralité de trames d'image pour déterminer qu'une première portion partielle de l'action se produit dans un champ de vision du dispositif d'imagerie et qu'une seconde portion partielle de l'action se produit en dehors du champ de vision du dispositif d'imagerie ;
identifier un type de mouvement pendant l'action sur la base de la première portion partielle ;
extrapoler le mouvement pour générer une trajectoire de mouvement correspondant à la seconde portion partielle de l'action ;
reconnaître les actions humaines à partir du type de mouvement et de la trajectoire générée du mouvement ; et
identifier une trame de pic, parmi la pluralité de trames d'image, comprenant un point de pic de l'action effectuée par l'au moins une entité sur la base de la trajectoire générée ;
**caractérisé en ce que** l'au moins un processeur (102) est en outre configuré pour :
construire un arbre binaire de la pluralité de trames d'image ayant une trame de pic identifiée comme un nœud racine ; et
reconnaître les actions humaines par analyse de l'arbre binaire construit dans un parcours par ordre de niveau ;
dans lequel une ou plusieurs trames d'image reçues avant la trame de pic identifiée forment une branche de l'arbre binaire et une ou plusieurs autres trames d'image reçues après la trame de pic identifiée forment une autre branche de l'arbre binaire,
dans lequel l'analyse de l'arbre binaire construit en parcours par ordre de niveau comprend le processeur étant configuré pour :
réorganiser l'ordre séquentiel de la pluralité de trames en utilisant le parcours par ordre de niveau de l'arbre binaire construit ;
identifier un motif correspondant à des positions de l'au moins une entité dans la pluralité de trames réorganisées ; et
comparer le motif identifié avec un ou plusieurs motifs pré-entraînés pour reconnaître les actions humaines effectuées par l'au moins une entité.

5. Système (100) tel que revendiqué dans la revendication 4, dans lequel l'au moins un processeur (102) est configuré pour :
réduire en échelle la pluralité de trames d'image sur la base d'au moins l'un parmi un état d'alimentation électrique ou des informations de ressources d'un système ; et
analyser la pluralité de trames d'image réduites en échelle pour déterminer que la première portion partielle de l'action se produit dans le champ de vision du dispositif d'imagerie et que la seconde portion partielle de l'action se produit en dehors du champ de vision du dispositif d'imagerie.

6. Système (100) tel que revendiqué dans la revendication 4, dans lequel l'au moins un processeur (102) est configuré pour :
identifier des trames d'image à des intervalles prédéterminés parmi la pluralité de trames d'image sur la base d'au moins l'un parmi un état d'alimentation électrique ou des informations de ressources d'un système ; et
analyser les trames d'image identifiées pour déterminer que la première portion partielle de l'action se produit dans le champ de vision du dispositif d'imagerie et que la seconde portion partielle de l'action se produit en dehors du champ de vision du dispositif d'imagerie.
